# EUROPÄISCHE PATENTSCHRIFT

(11) **EP 2 223 472 B1**
(45) Veröffentlichungstag und Bekanntmachung des Hinweises auf die Patenterteilung: **21.03.2012**
(21) Anmeldenummer: 08866267.1
(22) Anmeldetag: 29.11.2008
(51) Int. Cl.: H04L 12/40

(54) **KOMMUNIKATIONSSYSTEM**
COMMUNICATION SYSTEM
SYSTÈME DE COMMUNICATION

(30) Priorität: 21.12.2007 DE 102007061986
(43) Veröffentlichungstag der Anmeldung: 01.09.2010
(73) Patentinhaber: Bayerische Motoren Werke Aktiengesellschaft, 80809 München (DE)
(72) Erfinder: STEFFEN, Rainer, 80636 München (DE); HINTERMAIER, Wolfgang, 85435 Erding (DE)
(74) Vertreter: Mayer-Martin, Christian
(86) Internationale Anmeldenummer: PCT/EP2008/010142
(87) Internationale Veröffentlichungsnummer: WO 2009/083078

(56) Entgegenhaltungen:
- DE-A1- 19 851 245
- DE-A1-102004 020 880
- NIKOLOUTSOS E ET AL: "Integrating IP traffic into fieldbus networks" INDUSTRIAL ELECTRONICS, 2002. ISIE 2002. PROCEEDINGS OF THE 2002 IEEE INTERNATIONAL SYMPOSIUM ON JULY 8-11, 2002, PISCATAWAY, NJ, USA,IEEE, Bd. 1, 8. Juli 2002 (2002-07-08), Seiten 67-72, XP010598147 ISBN: 978-0-7803-7369-3

## Beschreibung

Die Erfindung betrifft ein Kommunikationssystem insbesondere für ein Kraftfahrzeug.

Zur Datenübertragung zwischen Kraftfahrzeug-Steuergeräten etabliert sich derzeit der so genannte Flex-Ray-Standard ("FlexRay"), der durch eine vorgegebene Protokollspezifikation beschrieben wird.

Flex-Ray soll die erhöhten Anforderungen zukünftiger Vernetzung im Fahrzeug erfüllen, insbesondere höhere Datenübertragungsrate, Echtzeit-Fähigkeit und Ausfallsicherheit. Im aktuellen Fokus steht jedoch vorrangig die höhere Datenrate, welche durch die kontinuierliche Zunahme von verteilten Anwendungen, beispielsweise Fahrerassistenzsystemen, in Premiumfahrzeugen heute notwendig ist.

Um einen Flex-Ray-Netzknoten, z.B. ein Steuergerät, an einem Flex-Ray-Bus zu betreiben, werden in der Regel zwei Komponenten eingesetzt: der Bus Transceiver und den Communication Controller.

Der Bus Transceiver stellt die direkte Verbindung zur Datenleitung her: Einerseits schreibt er die logische Information, die versendet werden soll, in Form von Spannungspulsen auf den Bus; andererseits liest er die Signale aus, die von anderen Teilnehmern auf dem Bus gesendet werden. Diese Ebene wird als physikalische Bitübertragungsschicht oder Physical Layer bezeichnet.

Außerdem umfasst Flex-Ray noch das Busprotokoll. Das Busprotokoll regelt, wie ein Netzwerk startet, wie ein Bustakt etabliert wird und welche Steuergeräte zu welchem Zeitpunkt senden dürfen. Der Communication Controller setzt das Busprotokoll in jedem Steuergerät um, beispielsweise verpackt er die zu übertragenden Informationen in ein Datenpaket und übergibt dieses Datenpaket zum richtigen Zeitpunkt zur Übertragung an den Bus Transceiver

Das Internet Protocol (IP) ist ein in Computernetzen weit verbreitetes Netzwerkprotokoll. Es ist eine (bzw. die) Implementierung der Internet-Schicht des TCP/IP-Referenzmodells bzw. der Vermittlungsschicht (Network Layer) des OSI-Referenzmodells. IP bildet die erste vom Übertragungsmedium unabhängige Schicht der lnternetprotokoll-Familie. Eine IP-Adresse (Internet-Protocol-Adresse) dient zur eindeutigen Adressierung von Rechnern und anderen Geräten in einem lP-Netzwerk. Die Offenlegungsschrifft DE102004020880 offenbart ein eine Schnittstelle zur Kommunikation zwischen Fahrzeug-Applikationen und Fahrzeug-Bussystemen, wobei IP-Daten über einen Linux Network Layer an einen CAN-Controller übergeben werden.

Es sind Kommunikationssysteme bekannt, die eine Medienzugriffsschicht (MAC Layer, Media Access Control) umfassen, durch welche der Zugriff auf das Übertragungsmedium gesteuert wird, und durch welche beispielsweise Multiplexverfahren gesteuert werden können.

Es ist außerdem eine medienunabhängige Schnittstelle (Media Independent Interface (MII)) bekannt und standardisiert, durch welche eine Medienzugriffsschicht, insbesondere eine Ethernet-Schicht bzw. im Ethernet-Datenpaketformat bereitgestellte Datenpakete, auf eine physikalische Schicht umgesetzt werden können.

Der Erfindung liegt nun die Aufgabe zugrunde, ein gegenüber dem Stand der Technik verbessertes Kommunikationssystem anzugeben.

Diese Aufgabe wird durch die Merkmale des unabhängigen Anspruchs gelöst. Vorteilhafte Weiterbildungen der Erfindung sind den abhängigen Ansprüchen zu entnehmen.

Ein erfindungsgemäßes Kommunikationssystem umfasst eine Vielzahl von Flex-Ray-Netzknoten, durch die jeweils Datenpakete in einem IP-Datenpaketformat oder Ethernet-Datenpaketformat bereitgestellt werden, insbesondere erzeugt, übermittelt, zwischengespeichert und/oder modifiziert, werden. Das IP-Datenpaketformat oder das Ethernet-Datenpaketformat weist jeweils eine Vielzahl von Bitstellen auf, die zur Übertragung vorgegebener Informationsarten vorgesehen sind. Über die physikalische Schicht eines Flex-Ray-Bussystem werden Daten zwischen den Flex-Ray-Netzknoten übertragen. Die Flex-Ray-Netzknoten umfassen jeweils eine softwaretechnische und/oder hardwaretechnische Medienzugriffsschicht (MAC), die derart eingerichtet ist, dass die in einem IP-Datenpaketformat oder Ethernet-Datenpaketformat bereitgestellten Datenpakete in ein vorgegebenes medienunabhängiges Datenformat (im Folgenden auch Datenpaketformat genannt), das insbesondere durch den so genannten MII(Media Independent Interface)-Standard oder einen davon abgeleiteten oder einen darauf basierenden Standard (beispielsweise RMII, SMII, GMII, etc.) vorgegeben ist, umgesetzt werden. Die Flex-Ray-Netzknoten umfassen jeweils eine softwaretechnische und/oder hardwaretechnische Anpassungsschicht, die derart eingereichtet ist, dass die in dem medienunabhängigen Datenformat bereitgestellten Daten, insbesondere Datenpakete, auf entsprechende Signale der physikalischen Schicht des Flex-Ray-Bussystems umgesetzt werden.

Die Datenpakete oder Daten werden dabei vorzugsweise vor einer Umsetzung auf die vorgegebenen Signale der physikalischen Schicht des Flex-Ray-Bussystems nicht in Flex-Ray-Datenrahmen umgesetzt oder gepackt. Ein erfindungsgemäßer Flex-Ray-Netzknoten unterscheidet sich also vorzugsweise dadurch von einem herkömmlichen Flex-Ray-Netzknoten, dass durch ihn Datenpakete in einem IP-Datenpaketformat oder Ethernet-Datenpaketformat bereitgestellt werden, und dass diese - ohne Zwischenspeicherung in Form von Flex-Ray-Datenrahmen (mit entsprechendem vorgegebenen Datenformat) - über eine entsprechend eingerichtete Medienzugriffsschicht auf die an sich bekannte und vorgegebene, insbesondere standardisierte, physikalische Schicht des Flex-Ray-Bussystems (FRB) abgebildet werden. Durch die Nutzung einer an sich bekannten, erprobten und in großen Stückzahlen eingesetzten Medienzugriffsschicht (MAC) samt der damit einhergehenden und ebenfalls an sich bekannten und erprobten Nutzung eines medienunabhängigen Datenformates kann die IP- oder Ethernet-Technologie mit geringem Aufwand und zuverlässig mit der an sich aus dem Kraftfahrzeugbereich bekannten Flex-Ray-Technologie kombiniert werden.

Dadurch wird erreicht, dass IP-Datenpakete oder Ethernet-Datenpakete, die aus einer Vielzahl von bekannten programmtechnischen oder hardwaretechnischen Einrichtungen hervorgehen können, über eine bewährte, insbesondere für kraftfahrzeugtechnische Umgebungen erprobte und geeignete, physikalische Schicht übertragen werden können. Dadurch dass das starre logische Gerüst des Flex-Ray-Bussystems, das im Wesentlichen durch die Flex-Ray-Datenrahmen-Struktur und die Flex-Ray-Zeitschlitz-Struktur bestimmt ist, nicht angewendet wird, sondern stattdessen IP-Datenpakete oder Ethernet-Datenpakete mittelbar über die medienunabhängige Schicht, insbesondere MII-Schicht, auf die physikalische Schicht abgebildet werden, können die Flexibilitäts- und Kostenvorteile der IP/Ethernet-Technologie mit den Vorteilen der Flex-Ray-Technologie kombiniert werden. Es wird insgesamt ein stabiles, zuverlässiges, flexibles, leistungsfähiges und ökonomisch realisierbares Kommunikationssystem, insbesondere für ein Kraftfahrzeug, geschaffen.

Es können neben den erfindungsgemäß eingerichteten Flex-Ray-Netzknoten in dem Kommunikationssystem selbstverständlich auch herkömmliche Flex-Ray-Netzknoten vorgesehen sein.

Selbstverständlich können die Flex-Ray-Netzknoten auch derart eingerichtet sein, dass sie neben der erfindungsgemäßen Umsetzung von Daten auf die physikalische Flex-Ray-Schicht auch eine konventionelle Umsetzung von Daten auf die physikalische Flex-Ray-Schicht durchführen, wobei die Daten vorher in Flex-Ray-Datenrahmen gepackt werden können.

Ein IP-Datenpaket umfasst im Rahmen der Erfindung Datenpakete, die gemäß dem Internet-Protocol gebildet sind, aber auch Datenpakete, die aus einem solchen Internet-Protocol-konformen Datenpaket abgeleitet oder in Anlehnung an solche Datenpakete gemäß dem Internet-Protocol gebildet sind. Beispielsweise umfasst ein IP-Datenpaket im Rahmen der Erfindung auch Datenpakete, die gemäß dem Internet-Protocol gebildet sind, die aber weitere Daten umfassen, oder Teile von Datenpaketen, die gemäß dem Internet-Protocol gebildet sind. Ebenso sind im Rahmen der Erfindung von dem Begriff "IP-Datenpaket" Datenpakete umfasst, die unmittelbar oder mittelbar aus einer Internet-Protokollschicht hervorgehen. In der Regel umfasst das IP-Datenpaket eine IP-Adresse oder Zieladresse.

Je nach Ausführungsvariante kann es sich bei dem Flex-Ray-Bussystem und/oder den Flex-Ray-Netzknoten um gegenüber einem herkömmlichen Flex-Ray-Bussystem und/oder herkömmlichen Flex-Ray-Netzknoten modifizierte oder "abgespeckte" Einrichtungen handeln. Im Rahmen der Erfindung umfasst ein Flex-Ray-Netzknoten daher auch Netzknoten, die von einem Flex-Ray-Protokoll lediglich die physikalische Schicht ausführen oder umfassen. Entsprechend umfasst ein Flex-Ray-Bussystem im Rahmen der Erfindung ein Bussystem oder Busprotokoll, das von dem Flex-Ray-Protokoll lediglich die physikalische Schicht ausführt oder umfasst. Die anderen Schichten können ganz oder teilweise gemäß anderen, beispielsweise an sich bekannten Protokollen oder Spezifikationen ausgeführt sein.

Besonders flexibel ist ein Kommunikationssystem, das ein IP-Netzwerk und ein Flex-Ray-Bussystem umfasst, wobei das IP-Netzwerk durch einen Router mit dem Flex-Ray-Bussystem gekoppelt ist.

Vorzugsweise werden durch die Anpassungsschicht Inhalte der Bitstellen der in dem medienunabhängigen Datenformat oder Datenpaketformat bereitgestellten Daten oder Datenpakete jeweils auf entsprechende Signale der physikalischen Schicht des Flex-Ray-Bussystems (FRB) umgesetzt. Die Flex-Ray-Netzknoten sind dabei derart eingerichtet, dass Inhalte der Bitstellen der Daten oder Datenpakete im medienunabhängigen Datenformat oder Datenpaketformat, insbesondere mittelbar oder unmittelbar, jeweils auf entsprechende Signale, Signalformen, Pulsformen oder Signalpulse der physikalischen Schicht des Flex-Ray-Bussystems (FRB) umgesetzt werden.

Vorzugsweise basiert das Flex-Ray-Bussystem, insbesondere die physikalische Schicht des Flex-Ray-Bussystems, auf zwei physikalischen Flex-Ray-Kanälen (erster Kanal und zweiter Kanal). Vorzugsweise ist dazu eine Kommunikationssteuereinrichtung, die Medienzugriffsschicht oder die Anpassungsschicht zumindest eines Flex-Ray-Netzknotens derart eingerichtet, dass die physikalische Schicht des Flex-Ray-Bussystems einen ersten und einen zweiten physikalischen Kanal umfasst.

Vorteilhafterweise ist die Kommunikationssteuereinrichtung, die Medienzugriffsschicht oder die Anpassungsschicht zudem derart eingerichtet, dass über den ersten Kanal Daten gesendet werden und über den zweiten Kanal Daten empfangen werden.

Im Folgenden wird die Erfindung anhand von Beispielen unter Bezugnahme auf die folgenden Figuren näher erläutert:
- Figur 1: zeigt eine vereinfachte Protokollschichten-Darstellung eines vereinfachten Kommunikationssystems;
- Figur 2: zeigt eine vereinfachte auszugsweise Protokollschichten-Darstellung eines Flex-Ray-Netzknotens;
- Figuren 3 bis 6: zeigen schematische Darstellungen von Kommunikationssystemarchitekturen.

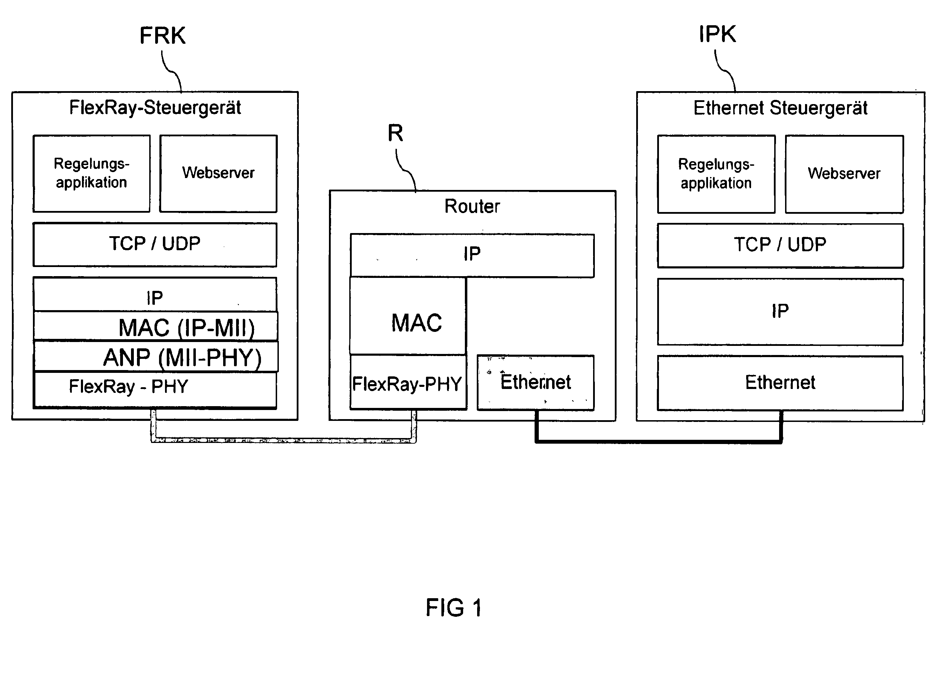

In Figur 1 sind exemplarisch ein Flex-Ray-Netzknoten FRK und ein IP-Netzknoten IPK mit den zugehörigen Protokollschichten dargestellt. Der Flex-Ray-Netzknoten FRK und der IP-Netzknoten IPK sind durch einen Router R miteinander gekoppelt.

Bei den Flex-Ray-Netzknoten FRK ist die unterste Schicht (Bitübertragungsschicht, physikalische Schicht) gebildet oder bestimmt durch die Flex-Ray-Spezifikation oder die entsprechende Schicht des Flex-Ray-Protokolls (Flex-Ray-PHY). Darüber liegen eine später zu erläuternde Anpassungsschicht und eine später zu erläuternde Medienzugriffsschicht. Darüber liegen als Vermittlungsschicht die IP(Internet Protocol)-Schicht. Darüber liegt als Transportschicht zum Beispiel das Transmission Control Protocol (TCP) oder das User Datagram Protocol (UDP). Darüber sind in der Anwendungsschicht verschiedene Applikationen realisiert.

Durch die Applikationen werden Daten erzeugt und in definierter Form an die Transportschicht weitergegeben. Durch die Transportschicht werden diese Daten insbesondere um Steuerdaten ergänzt und in definierter Form an die Vermittlungsschicht weitergegeben. Durch die Vermittlungsschicht werden die Daten insbesondere um Steuerdaten weiter ergänzt in IP-Datenpakete gepackt.

Die durch die IP-Schicht IP des Flex-Ray-Netzknotens FRK bereitgestellten IP-Datenpakete werden durch eine an sich bekannte Medienzugriffsschicht MAC in ein an sich bekanntes und standardisiertes medienunabhängiges MII-Datenformat, das die logische und/oder physikalische Struktur der zu übertragenden Daten bestimmen kann, umgesetzt (IP-MII).

Durch eine entsprechend eingerichtete Anpassungsschicht ANP werden diese Daten an die Flex-Ray-Schicht übergeben, insbesondere direkt auf die physikalische Schicht des Flex-Ray-Protokolls umgesetzt. Zur physikalischen Bitübertragung werden durch die Anpassungsschicht die logischen Werte der Bitstellen der Daten oder des Datenpaketes im MII-Datenformat bzw. MII-Datenpaketformat entsprechend den Vorgaben des Flex-Ray-Protokolls in physikalische Signale umgesetzt und über den Flex-Ray-Bus, insbesondere die entsprechenden physikalischen Leitungen, übertragen. Dieser Ablauf kann für den Empfang von Daten durch einen Flex-Ray-Netzknoten FRK in umgekehrter Richtung ablaufen.

Die entsprechenden physikalischen Signale werden durch den Router R empfangen und über eine entsprechende Medienzugriffsschicht MAC auf entsprechende IP-Datenpakete rückabgebildet. Hierbei kann es sich um die gleiche Medienzugriffsschicht samt entsprechender Anpassungsschicht (nicht dargestellt) oder eine andere Medienzugriffsschicht handeln. Die IP-Datenpakete können dann auf an sich bekannte Art von dem Router über das Ethernet an einen Ziel-IP-Netzknoten IPK vermittelt werden.

Bei den IP-Netzknoten IPK ist die unterste Schicht (Bitübertragungsschicht) gebildet durch das Ethernet-Protokoll oder die entsprechende Schicht des Ethernet-Protokolls. Darüber liegt als Vermittlungsschicht die IP(Internet Protocol)-Schicht. Darüber liegt als Transportschicht zum Beispiel das Transmission Control Protocol (TCP) oder das User Datagram Protocol (UDP).Darüber sind in der Anwendungsschicht verschiedene Applikationen realisiert.

Durch die Medienzugriffsschicht MAC kann zudem ein gegenüber dem TDMA-Verfahren der Flex-Ray-Spezifikation flexibleres Medienzugriffsverfahren realisiert sein. Dabei erwiesen sich insbesondere die folgenden, an sich bekannten Verfahren als besonders vorteilhaft:
- Aloha-Verfahren: Sobald Daten zur Übertragung anliegen, werden diese auf den Bus gesendet. Da es bei der Übertragung zu Kollisionen durch gleichzeitig sendende Knoten kommen kann, wird jedes übertragene Datenpaket bestätigt.
- Carrier Sense Multiple Access (CSMA): Bevor auf den Bus zugegriffen wird um zu senden, wird überprüft ob bereits ein anderer Knoten eine Nachricht überträgt (Carrier Sense). Ist dies nicht der Fall, kann auf den Bus zugegriffen werden. Sollte der Bus aktuell belegt sein, können unterschiedliche Strategien zur weiteren Beobachtung des Buszustands eingesetzt werden:
   1-persistent: Sobald der Bus als frei erkannt wird, wird die Übertragung gestartet. Sollten mehrere Knoten gleichzeitig einen Sendewunsch haben, kann es zu Kollisionen kommen.
   non-persistent: Nach dem Erkennen eines belegten Kanals wird eine zufällige Backoff-Zeit gewartet bis erneut versucht wird, auf den Bus zuzugreifen. p-persistent: Sobald der Bus als frei erkannt wird, wird mit einer Wahrscheinlichkeit von p auf den Bus gesendet und mit einer Wahrscheinlichkeit von 1-p eine bestimmte Zeit gewartet.
- Falls die Physikalische Schicht in der Lage ist, eine Kollision zu detektieren, kann diese Information genutzt werden, um Zugriffskonflikte aufzulösen. Eine Methode Zugriffskonflikte aufzulösen besteht darin, eine zufällige Zeit nach einer Kollision zu warten, bevor erneut auf das Medium zugegriffen wird.
- Priorisierter CSMA Zugriff: Durch eine Variation der Wartezeiten bis auf den Bus zugegriffen werden darf, kann den Datenpaketen eine Priorität zugewiesen werden.
- Master Slave: Um ein deterministisches zeitliches Verhalten zu ermöglich, besteht die Möglichkeit den Buszugriff über ein Master/Slave Verfahren zu regeln. Hierbei gibt es im System mindestens einen Master, der den Zugriff der Busteilnehmer regelt, indem er ihnen Senderechte explizit und exklusiv zuteilt.
Zudem besteht die Möglichkeit, die übertragenen Datenpakete jeweils mit einem Acknowledgement-Paket (ACK) oder einem Not-Acknowledgement-Paket (NACK) abzusichern. Im Bedarfsfall kann dann eine erneute Übertragung des verloren gegangenen Datenpaketes durchgeführt werden.

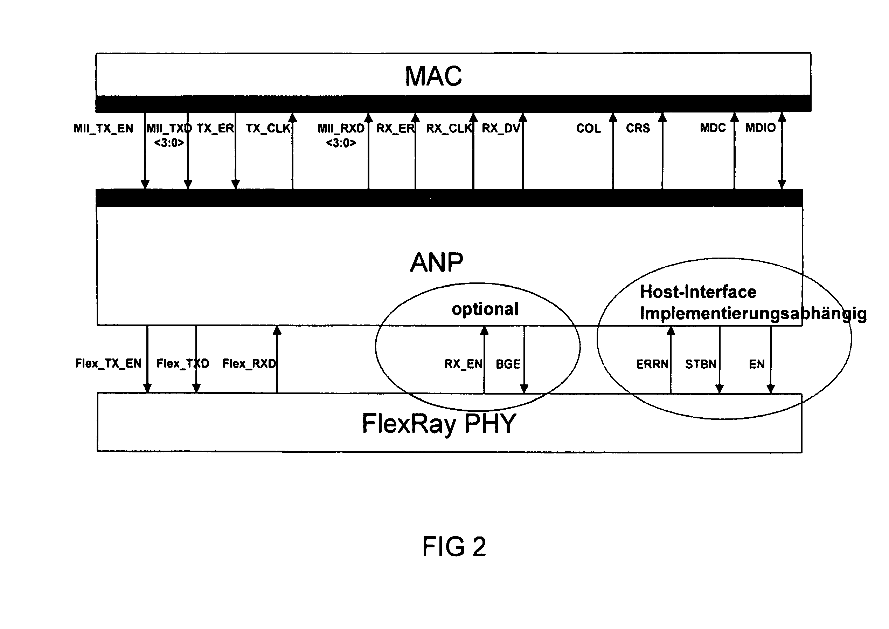

Die Anpassungsschicht ANP, welche über die Medienzugriffsschicht Daten im MO-Format erhält, ist - wie in Figur 2 im Detail dargestellt - zur Abbildung der Daten im MII-Format auf Daten oder Signale im Format der physikalischen Flex-Ray Schicht geeignet eingerichtet. Eine beispielhafte geeignete softwaretechnische und/oder hardwaretechnische Einrichtung wird im Folgenden näher erläutert. Es wird jeweils angegeben, welche Bedeutung die einzelnen Mil-Bitstellen oder MII-Signale haben, und welche Aktionen dadurch durch die Anpassungsschicht ausgelöst werden:
Mll_TX_EN:
   Ein High Signal an MII_TX_EN zeigt an, dass Daten am MII Datenbus MII_TXD zur Übertragung bereitgestellt werden. Dieses Signal wird synchron mit der Übertragung des ersten Daten-Nibbles (MII_TXD <3:0>) gesetzt und behält solange seinen Zustand, wie Daten an TXD übertragen werden. Um dem Transmitter mitzuteilen, dass Daten zur Übertragung bereit stehen, sorgt die Anpassungsschicht dafür, dass folgende Signale am Transmitter (Physikalische Schicht) geschaltet werden: Flex_TX_EN->LOW: Sobald die Datenübertragung beendet ist (MII_TX_EN = LOW) werden folgende Signale am Transmitter geschaltet: Flex_TX_EN->HIGH.
MII_TXD:
   MII_TXD besteht aus 4 Signalen (MII_TXD <3:0>). Über diese Signale werden die vom Endgerät zu übertragenden Daten von der MAC Schicht über die Anpassungsschicht an den Transmitter (Physikalische Schicht) übergeben. Die Übertragung erfolgt synchron zum Taktsignal TX_CLK. MII_TXD <0> stellt von den MII_TXD Signalen das Bit mit dem niedrigsten Stellenwert dar. Die TXD <3:0> Signale werden taktsynchron zum TX_CLK Takt in der Anpassungsschicht von einem parallelen Signal in ein serielles Signal umgewandelt und an das Flex_TXD Signal des Transmitter (Physikalische Schicht) übergeben, falls MII_TX_EN gesetzt wurde.
TX_ER:
   Dieses Signal zeigt einen "Transmission coding Error" an und wird, falls dieser auftritt, synchron zum TX_CLK Takt ausgelöst (HIGH-Signal). Da die Datenübertragung im Transmitter (Physikalische Schicht) bei 10 Mb/s erfolgt, sieht der IEEE 802.3 Standard vor, dass das Setzen dieses Signals (TX_ER HIGH) keine Auswirkungen auf den Transmitter (Physikalische Schicht) haben soll. Für die Anpassungsschicht folgt daraus, dass dieses Signal vom MII ignoriert werden kann.
TX_CLK:
   Dieses Signal stellt ein kontinuierliches Taktsignal dar, welches als Zeitreferenz zum Transfer folgender Signale von der MAC Schicht zum Transmitter (Physikalische Schicht) verwendet wird: MII_TX_EN, MII_TXD, TX_ER. Dieses Taktsignal wird von der Anpassungsschicht zur Verfügung gestellt, um die Zeitreferenz zum Datenaustausch der oben genannten Signale bereitzustellen. Die TX_CLK Frequenz soll 25% der nominalen Datenrate betragen (+-) 100ppm. Das Tastverhältnis (duty cycle) sollte zwischen 35% und 65% liegen.
RX_CLK:
   Dieses Signal stellt ein kontinuierliches Taktsignal dar, welches als Zeitreferenz zum Transfer folgender Signale vom Transmitter (Physikalische Schicht) zur MAC Schicht verwendet wird: RX_DV, MII_RXD, RX_ER. Dieses Taktsignal wird von der Anpassungsschicht zur Verfügung gestellt, um die Zeitreferenz zum Datenaustausch der oben genannten Signale bereitzustellen. Dieses Taktsignal kann entweder aus den empfangenen Daten abgeleitet werden oder als nominales Taktsignal bereitgestellt werden. Solange das Signal RX_DV gesetzt ist, soll das Taktsignal TX_CLK synchron mit den "recovered" (empfangenen) Daten sein. Die RX_CLK Frequenz soll 25% der nominalen Datenrate betragen. Das Tastverhältnis (duty cycle) sollte zwischen 35% und 65% liegen.
RX_DV:
   Dieses Signal zeigt an, dass der Transceiver (Physikalische Schicht) über die Anpassungsschicht decodierte Signale an MII_RXD <3:0> ausgibt und diese synchron zu RX_CLK sind. Dieses Signal wird synchron zum RX_CLK Signal gesetzt und bleibt solange gesetzt. Es soll konstant vom ersten bis zum letzten empfangenen MII_RXD <3:0> Nibble gesetzt bleiben. Dieses Signal soll vor dem RX_CLK Signal zurückgesetzt werden, das dem letzten MII_RXD <3:0> Nibble folgt. Dieses Signal wird von der Anpassungsschicht abhängig von den Signalen Flex_RXD und ERRN des Transceivers (Physikalische Schicht) generiert.
MII_RXD;
   MII_RXD besteht aus 4 Signalen (MII_RXD <3:0>). Über diese Signale werden die vom Transceiver (Physikalische Schicht) empfangenen Daten über die Anpassungsschicht an die MAC Schicht übergeben. Die Übertragung erfolgt synchron zum Taktsignal RX_CLK. MII_RXD <0> stellt von den MII_RXD Signalen das Bit mit dem niedrigsten Stellenwert dar. Die vom Transceiver (Physikalische Schicht) empfangenen Daten werden taktsynchron zum RX_CLK Takt von einem seriellen Signal in ein paralleles Signal MII_RXD <3:0> umgewandelt.
RX_ER:
   Dieses Signal wird vom Transceiver (Physikalische Schicht) signalisiert und zeigt das Auftreten eines Fehlers an. Das Signal sollte für ein oder mehrere Taktzyklen gesetzt werden, um anzuzeigen, dass ein Fehler aufgetreten ist. Das RX_ER Signal soll taktsynchron zum RX_CLK Signal ausgelöst werden. (Bsp: Codierfehler, oder jeder andere Fehler, den der Transceiver in der Lage ist zu detektieren). Im Fall, dass der Transceiver (Physikalische Schicht) in der Lage ist, Fehler zu erkennen und diese anzuzeigen, wird die Anpassungsschicht den Fehlerfall durch Setzen des RX_ER (HIGH) Signals anzeigen.
CRS:
   Dieses Signal sollte gesetzt sein, wenn sich der Transceiver (Physikalische Schicht) im "Non-Idle" Zustand befindet. Dieses Signal muss nicht taktsynchron zu den Signalen TX_CLK oder RX_CLK erfolgen. Der Transceiver (Physikalische Schicht) sollte einen Flex_RX_EN Anschluss besitzen, so dass das CRS Signal gesetzt wird, sobald das Flex_RX_EN Signal des Transceivers gesetzt ist (HIGH), und zurückgesetzt, falls dieses Signal LOW ist.
COL:
   Dieses Signal soll anzeigen, wenn es auf dem Übertragungsmedium zu Kollisionen gekommen ist.
MDC:
   Dieses Signal stellt die Zeitbasis / Takt für das MDIO Signal dar. Es stellt ein aperiodisches Signal dar, welches keine maximalen HIGH oder LOW Zeitdauern besitzt. Die minimalen HIGH oder LOW Zeitdauern sollten 160ns betragen. Die minimale Periode dieses Signals sollte 400ns sein, unabhängig von den Signalen RX_CLK und TX_CLK. Dieses Taktsignal wird von der Anpassungsschicht bereitgestellt.
MDIO:
   Dieses Signal stellt einen bidirektionalen Kontrollkanal zwischen MAC und Transceiver (Physikalische Schicht) dar. Er wird dazu benutzt, Kontroll- und Statusinformationen auszutauschen. Diese Daten werden taktsynchron zum MDC Signal ausgetauscht. In der Anpassungsschicht wird diese Funktionalität konform den im 802.3 spezifizierten Standard implementiert.

Neben den genannten und in Figur 1 gezeigten Netzknoten können weitere Netzknoten vorgesehen sein. Im Folgenden werden verschiedene Kommunikationsnetztopologien näher erläutert, durch die erfindungsgemäße Flex-Ray-Netzknoten miteinander verbunden werden können.

Zunächst werden zwei Beispiele für die Vernetzung erfindungsgemäßer Flex-Ray-Netzknoten über ein gemeinsames Medium (shared medium) erläutert.

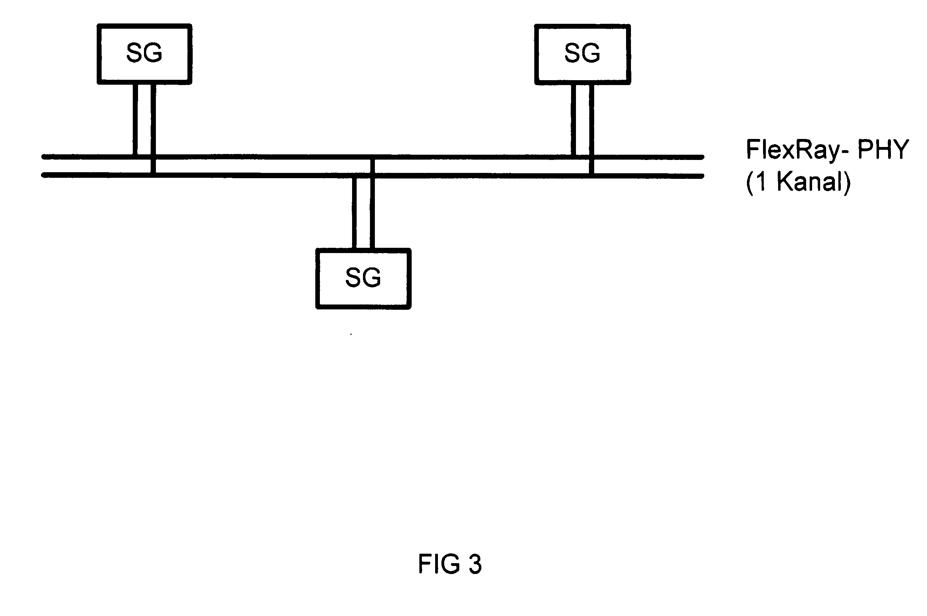

In Figur 3 ist eine Linientopologie dargestellt. Die erfindungsgemäßen Flex-Ray-Netzknoten, von denen hier und in den folgenden Figuren der Einfachheit halber immer nur das entsprechende Steuergerät SG dargestellt und erwähnt ist, werden dabei über eine gemeinsame Leitung und über Stichleitungen miteinander verbunden. Zu jedem Zeitpunkt greift immer nur genau ein Steuergerät schreibend auf das physikalische Übertragungs-Medium zu.

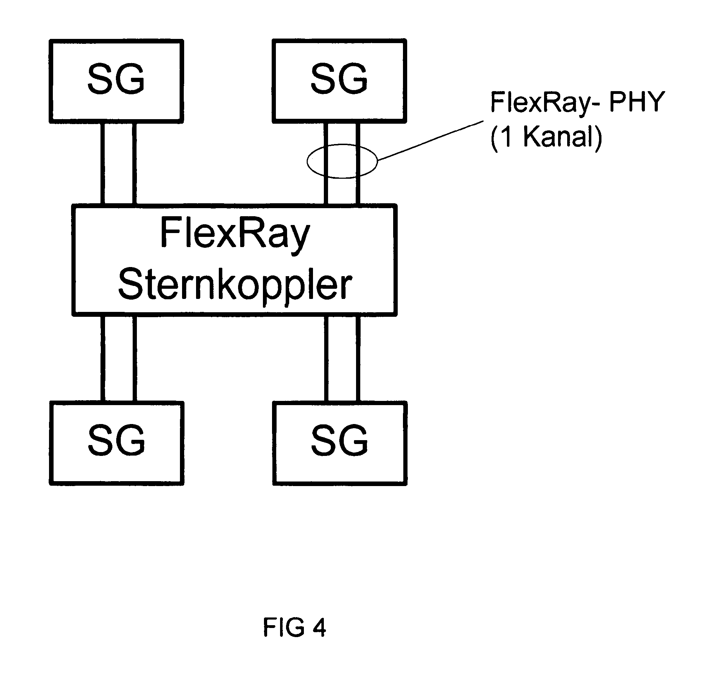

In Figur 4 ist eine Sterntopologie basierend auf einem FlexRay-Sternkoppler dargestellt. Die Steuergeräte SG werden sternförmig über einen FlexRay-Sternkoppler (siehe FlexRay Spezifikation) miteinander verbunden. Der Sternkoppler regeneriert die ankommenden Signale und gibt sie an alle anderen am Sternkoppler angeschlossenen Steuergeräte SG weiter. Wie auch bei der Linientopologie wird hier über ein gemeinsames Medium übertragen. Es darf zu jedem Zeitpunkt immer nur genau ein Steuergerät auf das Medium zugreifen. Auch eine Mischung aus den Topologien gemäß Figuren 3 und 4 kann vorteilhaft in die Praxis umgesetzt werden.

Im Folgenden werden zwei Beispiele für die Vernetzung erfindungsgemäßer Flex-Ray-Knoten über getrennte Medien erläutert.

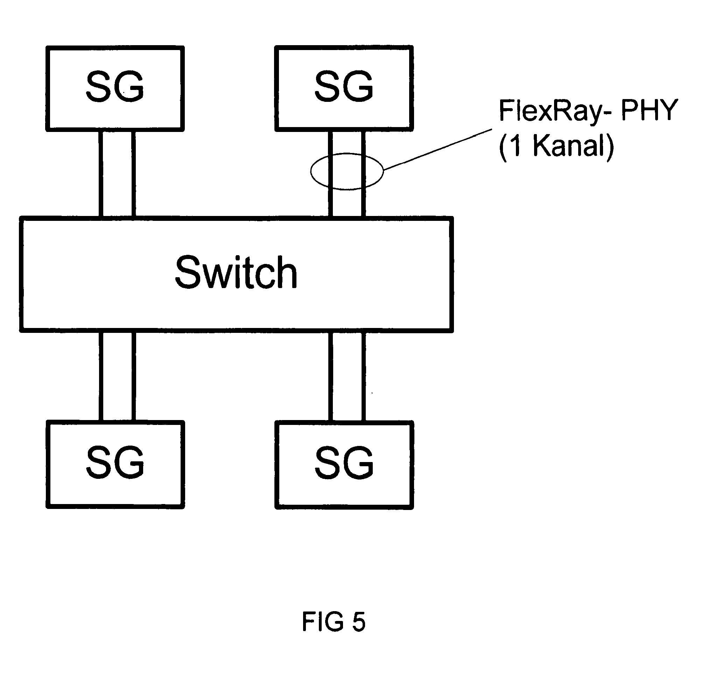

In Figur 5 ist eine Sterntopologie im Halb-Duplex-Betrieb dargestellt. Die Steuergeräte SG werden über den FlexRay-PHY (1 Kanal) an einen Switch angeschlossen. Der Switch führt eine Vermittlung der Daten, die über den FlexRay-PHY übertragen werden, durch. Beispielswiese kann der Switch anhand einer Ethernet Zieladresse oder einer IP-Zieladresse die Vermittlung durchführen. Im Gegensatz zum FlexRay-Sternkoppler werden ankommende Datenpakete also nicht automatisch an alle angeschlossenen Geräte weitergeleitet, sondern nur an diejenigen, an die die Datenpakete adressiert sind. Für die Kommunikation zwischen einem Steuergerät und dem Switch wird nur ein Kanal verwendet. Das bedeutet, dass immer nur entweder der Switch oder das Steuergerät schreibend auf den Kanal zugreifen können. Das System arbeitet somit im Halb-Duplex-Betrieb.

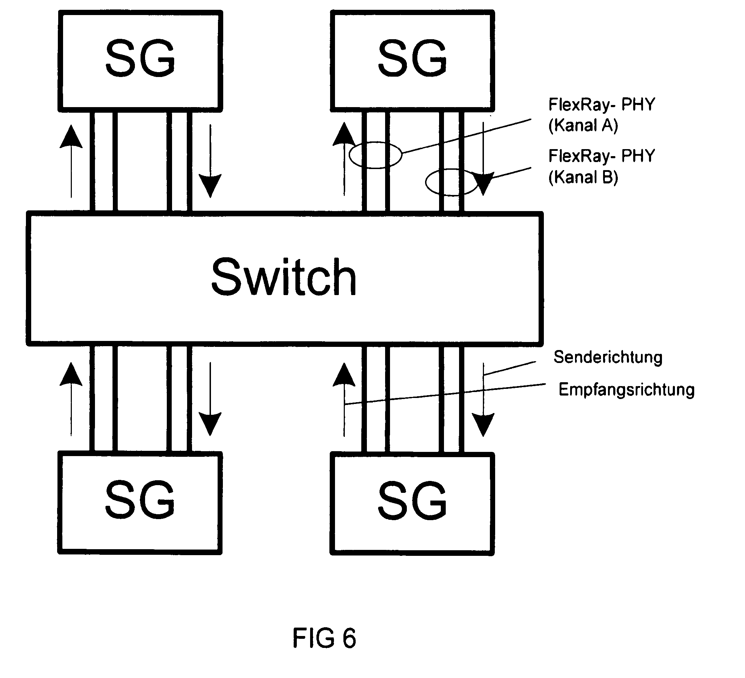

In Figur 6 ist eine Sterntopologie im Voll-Duplex-Betrieb dargestellt. Die Steuergeräte SG sind über zwei getrennte physikalische Flex-Ray-Kanäle (FlexRay-PHYs, Kanal A und Kanal B) an einen Switch angeschlossen. Einer der Flex-Ray-Kanäle wird dabei zum Senden, der andere zum Empfangen eingesetzt. Das bedeutet, dass sowohl der Switch als auch das Steuergerät zu jedem Zeitpunkt gleichzeitig senden und empfangen können und somit im Voll-Duplex-Betrieb arbeiten. Durch den Voll-Duplex-Betrieb kann gegebenenfalls auf ein Medienzugriffsverfahren, wie beispielsweise CSMA, verzichtet werden, da die angeschlossenen Geräte zu jedem Zeitpunkt Senden dürfen.

Zusammenfassend lassen sich also durch die Erfindung oder ihre Weiterbildungen einer oder mehrere der folgenden Vorteile erzielen:
- Verwendung eines automotive-tauglichen Übertragungsverfahrens für die IP-Kommunikation.
- Aufbau einer einfachen und kostengünstigen Linientopologie zur IP-Kommunikation.
- Aufbau einer einfachen und kostengünstigen Sterntopologie zur IP-Kommunikation.
- Durch das Standard MII-Interface ist eine einfache Anbindung des neuen Verfahrens an bereits vorhandene Systeme möglich.
- Kostengünstig, da Flex-Ray-Kommunikation in vielen Mikrocontrollern zukünftig implementiert sein wird und nur ein Subset der FlexRay-Funktionalität benötigt wird.
- Im Vergleich zu Standard-Flex-Ray einfacher und weniger komplex (keine Synchronisation, keine zeitgesteuerte Übertragung).
- Durch diese Lösung ist es möglich, eine kostengünstige Linientopologie oder Sterntopologie als Ergänzung zu einem switched IP-Netzwerk umzusetzen.

## Patentansprüche

1. Kommunikationssystem
- mit einer Vielzahl von Flex-Ray-Netzknoten (FRK), durch die jeweils Datenpakete in einem IP-Datenpaketformat oder Ethernet-Datenpaketformat bereitgestellt werden, wobei das IP-Datenpaketformat oder das Ethernet-Datenpaketformat jeweils eine Vielzahl von Bitstellen aufweist,
- mit einem Flex-Ray-Bussystem (FRB), über dessen physikalische Schicht Daten zwischen den Flex-Ray-Netzknoten (FRK) übertragen werden,
- wobei die Flex-Ray-Netzknoten (FRK) jeweils eine Medienzugriffsschicht (MAC) umfassen **dadurch gekennzeichnet, dass** die Medienzugriffsschicht derart eingerichtet ist, dass die in einem IP-Datenpaketformat oder Ethernet-Datenpaketformat bereitgestellten Daten in ein vorgegebenes medienunabhängiges Datenformat (MII) umgesetzt werden, das durch den Media Independent Interface-Standard oder einen davon abgeleiteten oder einen darauf basierenden Standard vorgegeben ist,
- wobei die Flex-Ray-Netzknoten (FRK) jeweils eine Anpassungsschicht (ANP) umfassen, die derart eingerichtet ist, dass die in dem medienunabhängigen Datenformat (MII) bereitgestellten Datenpakete auf entsprechende Signale der physikalischen Schicht des Flex-Ray-Bussystems (FRB) umgesetzt werden, und dass durch die Anpassungsschicht Inhalte der Bitstellen der in dem medienunabhängigen Datenformat bereitgestellten Daten jeweils auf entsprechende Signale der physikalischen Schicht des Flex-Ray-Bussystems (FRB) umgesetzt werden.

2. Kommunikationssystem nach Anspruch 1, bei dem ein Flex-Ray-Netzknoten (FRK) eine Kommunikationssteuereinrichtung umfasst, die derart eingerichtet ist, dass die physikalische Schicht des Flex-Ray-Bussystems einen ersten und einen zweiten physikalischen Kanal umfasst.

3. Kommunikationssystem nach Anspruch 2 bei dem die Kommunikationssteuereinrichtung derart eingerichtet ist, dass über den ersten Kanal Daten gesendet werden und über den zweiten Kanal Daten empfangen werden.

## Claims

1. A communication system
- with a large number of FlexRay network nodes (FRK), by means of which data packets are provided, in each case, in an IP data packet format or Ethernet data packet format, the IP data packet format or the Ethernet data packet format in each case having a large number of bit positions,
- with a FlexRay bus system (FRB), via the physical layer of which data are transmitted between the FlexRay network nodes (FRK),
- wherein the FlexRay network nodes (FRK) in each case comprise a media access layer (MAC), **characterised in that** the media access layer is set up in such a way that the data provided in an IP data packet format or Ethernet data packet format are converted into a predetermined media-independent data format (Mll), which is predetermined by the media-independent interface standard or a standard derived therefrom or based thereon,
- wherein the FlexRay network nodes (FRK) in each case comprise an adaptation layer (ANP), which is set up in such a way that the data packets provided in the media-independent data format (Mll) are converted in response to corresponding signals of the physical layer of the FlexRay bus system (FRB), and **in that** contents of the bit positions of the data provided in the media-independent data format are in each case converted by the adaptation layer in response to corresponding signals of the physical layer of the FlexRay bus system (FRB).

2. A communication system according to claim 1, wherein a FlexRay network node (FRK) comprises a communication control device, which is set up in such a way that the physical layer of the FlexRay bus system comprises a first and a second physical channel.

3. A communication system, according to claim 2, wherein the communication control device is set up in such a way that data are sent via the first channel and data are received via the second channel.

## Revendications

1. Système de communication comprenant :
- un ensemble de noeuds de réseau Flex-Ray (FRK) qui fournissent respectivement des paquets de données sous le format de paquets de données IP ou le paquet de données Ethernet,
* le format de paquets de données IP ou le format de paquets de données Ethernet, comportant chaque fois un ensemble de positions de bit,
- un système de bus Flex-Ray (FRB) par la couche physique duquel on échange les données entre les noeuds de réseau Flex-Ray (FRK),
- les noeuds de réseau Flex-Ray (FRK) ayant chacun une sous-couche d'accès au support (MAC),
système **caractérisé en ce que**
la sous-couche d'accès au support est conçue pour que les données présentées au format de paquets de données IP ou au format de paquets de données Ethernet soient transformées en un format de données (Mll), indépendant du support et qui est prévu par le standard Media Independent Interface ou par un standard dépendant ou un standard fondé sur celui-ci,
- les noeuds de réseau Flex-Ray (FRK) ayant chacun une couche d'adaptation (ANP) conçue pour que les paquets de données fournis au format de données (Mll) indépendant du support, soient transformés en des signaux correspondants de la couche physique du système de bus Flex-Ray (FRB) et que la couche d'adaptation transforme le contenu des positions de bit des données fournies au format de données indépendant du support, chaque fois en des signaux correspondants de la couche physique du système de bus Flex-Ray (FRB).

2. Système de communication selon la revendication 1,
selon lequel
un noeud de réseau Flex-Ray (FRK) comporte une installation de commande de communication conçue pour que la couche physique du système de bus Flex-Ray comporte un premier et un second canal physique.

3. Système de communication selon la revendication 2,
selon lequel
l'installation de commande de communication est conçue pour envoyer des données par le premier canal et recevoir des données par le second canal.
